# EUROPEAN PATENT APPLICATION

(11) **EP 4 517 477 A1**
(43) Date of publication of application: **05.03.2025**
(21) Application number: 23835650.5
(22) Date of filing: 06.04.2023
(51) Int. Cl.: G06F 1/16, H01F 7/02

(54) **FOLDABLE ELECTRONIC DEVICE COMPRISING ELASTIC MEMBER**

(30) Priority: 06.07.2022 KR 20220082894; 20.07.2022 KR 20220089799
(71) Applicant: Samsung Electronics Co., Ltd., Suwon-si, Gyeonggi-do 16677 (KR)
(72) Inventor: KIM, Jun, Suwon-si Gyeonggi-do 16677 (KR); KIM, Kangmoon, Suwon-si Gyeonggi-do 16677 (KR); KIM, Minsoo, Suwon-si Gyeonggi-do 16677 (KR)
(74) Representative: Gulde & Partner
(86) International application number: PCT/KR2023/004663
(87) International publication number: WO 2024/010181

(57) **Abstract**

Provided is an electronic device. The electronic device may comprise: a housing comprising a first housing and a second housing configured to rotate with respect to the first housing; a display comprising a first display area connected to the first housing, a second display area connected to the second housing, and a folding area positioned between the first display area and the second display area; a hinge cover which is connected to the first housing and the second housing and is configured to move on the basis of a force provided by a user; and an elastic member which is configured to unfold on the basis of the movement of the hinge cover and is configured to open at least a portion of the housing.

## Description

### [Technical Field]

The disclosure relates to a foldable electronic device including an elastic member.

### [Background Art]

Due to advancement in information and communication technology and semiconductor technology, various functions are being integrated into a single portable electronic device. For example, an electronic device may implement not only communication functions, but also entertainment functions such as gaming, multimedia functions such as music/video playback, communication and security functions for mobile banking or the like, and functions for schedule management and an electronic wallet function. These electronic devices are being miniaturized to be conveniently carried by users.

As mobile communication service extends into the multimedia service domain, it is necessary to increase the display sizes of electronic devices in order to allow users to fully utilize multimedia services, as well as voice calls and short message services. However, the display sizes of electronic devices are in a trade-off relationship with the miniaturization of electronic devices.

### [Detailed Description of the Invention]

### [Technical Solution]

According to an embodiment of the disclosure, an electronic device may include a housing including a first housing and a second housing configured to rotate with respect to the first housing, a display including a first display area connected to the first housing, a second display area connected to the second housing, and a folding area located between the first display area and the second display area, a hinge cover connected to the first housing and the second housing and configured to move based on force applied by a user, and an elastic member configured to unfold based on the movement of the hinge cover and to open at least a portion of the housing.

According to an embodiment of the disclosure, an electronic device may include a first housing, a second housing configured to rotate with respect to the first housing, a foldable display disposed in the first housing and the second housing, a hinge cover connected to the first housing and the second housing and configured to move based on force applied by a user, and an elastic member configured to come into contact with the hinge cover to open at least a portion of the electronic device. The elastic member may include a first area connected to the first housing, a second area connected to the second housing, and a third area located between the first area and the second area and configured to come into contact with the hinge cover.

### [Brief Description of Drawings]

FIG. 1 is a block diagram of an electronic device according to an embodiment of the disclosure in a network environment.
FIG. 2 is a view illustrating an electronic device according to an embodiment of the disclosure in an unfolded state.
FIG. 3 is a view illustrating the electronic device according to an embodiment of the disclosure in the folded state.
FIG. 4 is an exploded perspective view of an electronic device according to an embodiment of the disclosure.
FIG. 5 is a projection view of the electronic device according to an embodiment of the disclosure.
FIG. 6 is a schematic exploded perspective view of an electronic device according to an embodiment of the disclosure.
FIG. 7 is a cross-sectional view of an electronic device according to an embodiment of the disclosure.
FIG. 8 is a cross-sectional view of an electronic device according to an embodiment of the disclosure.
FIG. 9 is a perspective view of an electronic device including a hinge module and an elastic member according to an embodiment of the disclosure.
FIG. 10 is a top view of the electronic device including the hinge module and the elastic member according to an embodiment of the disclosure.
FIG. 11 is a side view of the electronic device including the hinge module and the elastic member according to an embodiment of the disclosure.
FIG. 12 is a cross-sectional view of an electronic device including a detent structure according to an embodiment of the disclosure.
FIG. 13 is a cross-sectional perspective view of the electronic device including the detent structure according to an embodiment of the disclosure.
FIG. 14 is a view illustrating angle maintenance of the electronic device according to an embodiment of the disclosure.
FIG. 15 is a perspective view of an electronic device including an input area according to an embodiment of the disclosure.
FIG. 16 is a cross-sectional view of the electronic device including the input area according to an embodiment of the disclosure.
FIG. 17 is a cross-sectional view of an electronic device including a trigger structure in a folded state, according to an embodiment of the disclosure.
FIG. 18 is a cross-sectional view of the electronic device including the trigger structure in an unfolded state, according to an embodiment of the disclosure.

### [Mode for Carrying out the Invention]

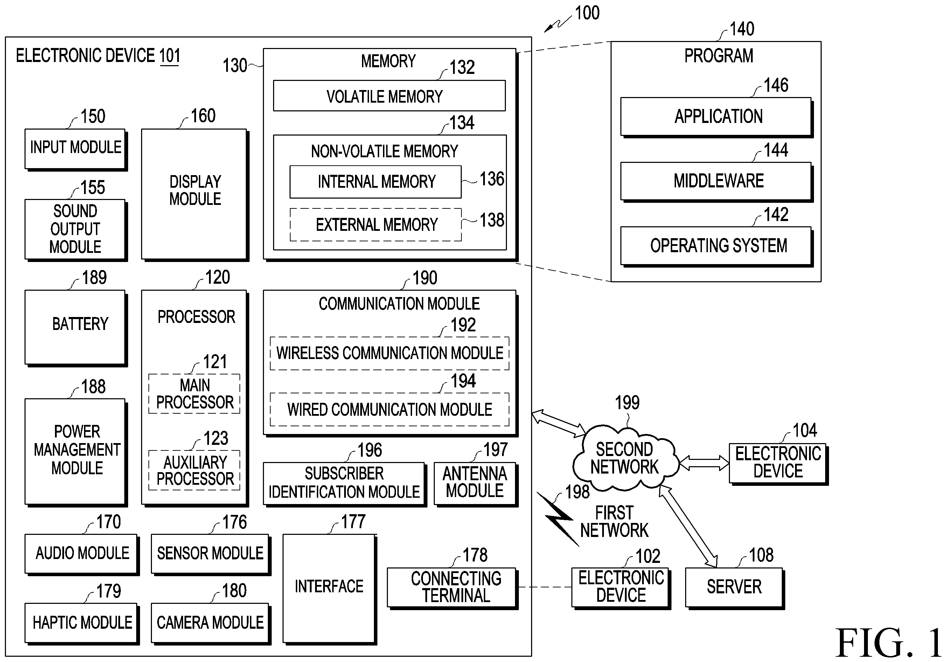

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

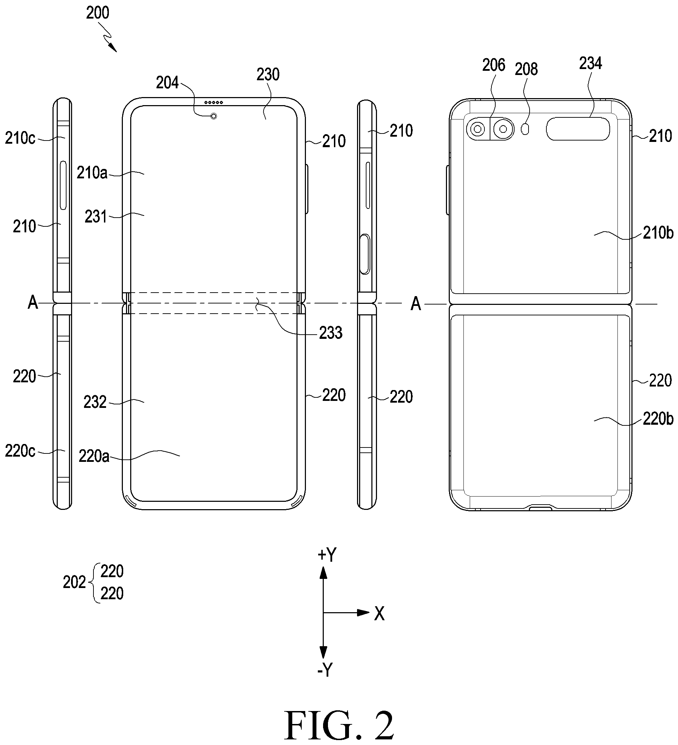

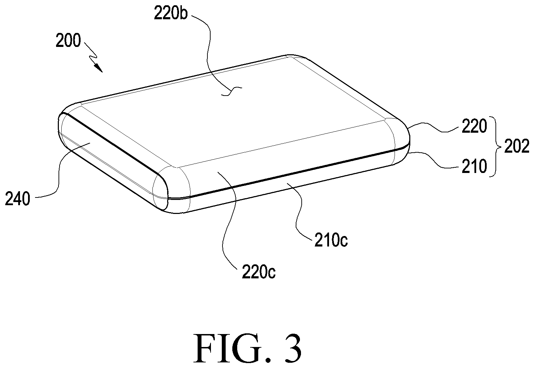

FIG. 2 is a view illustrating an electronic device according to an embodiment of the disclosure in an unfolded state. FIG. 3 is a view illustrating the electronic device according to an embodiment of the disclosure in a folded state. The configuration of the electronic device 200 of FIGS. 2 and 3 may be entirely or partially identical to that of the electronic device 101 of FIG. 1.

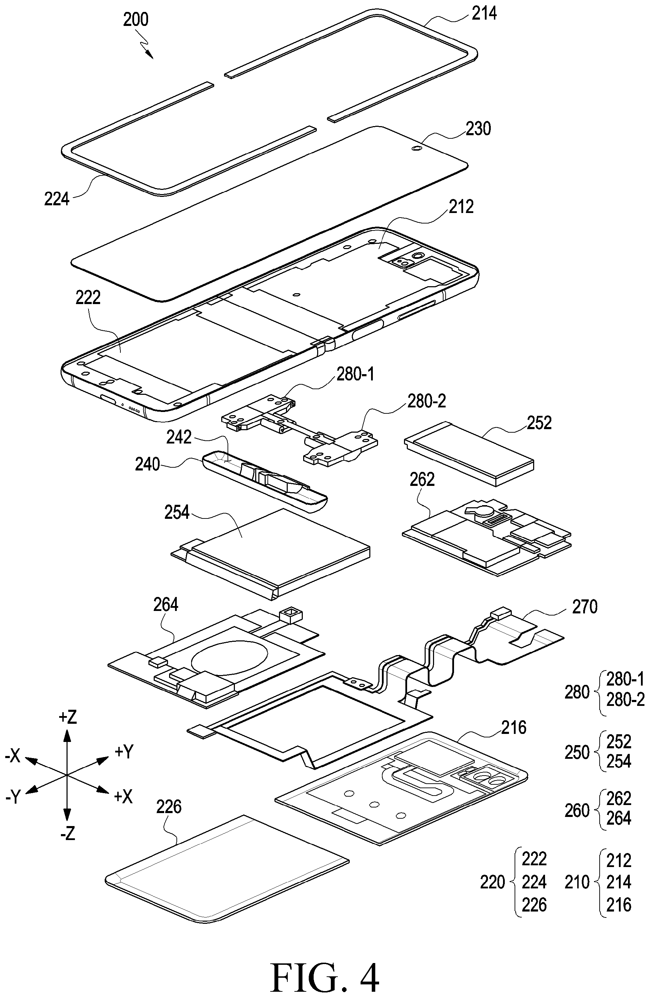

Referring to FIGS. 2 and 3, the electronic device 200 may include a housing 202 configured to accommodate components of the electronic device 200 (e.g., the battery 250 and/or the circuit board 260 in FIG. 4) and a flexible display or foldable display 230 (hereinafter, referred to as a display 230) connected to the housing 202. According to an embodiment, the housing 202 may be referred to as a foldable housing.

According to an embodiment, the housing 202 may include a first housing 210 and a second housing 220 configured to relatively rotate with respect to the first housing 210.

According to an embodiment, the first housing 210 and/or the second housing 220 may define at least a part of the exterior of the electronic device 200. According to an embodiment, the surface on which the display 230 is visually exposed is defined as the front surface (e.g., a first front surface 210a and a second front surface 220a) of the electronic device 200 and/or the housing 202. The surface opposite to the front surface is defined as the rear surface (e.g., a first rear surface 210b and a second rear surface 220b) of the electronic device 200. The surface surrounding at least a portion of the space between the front and rear surfaces is defined as the side surface (e.g., a first side surface 210c and a second side surface 220c) of the electronic device 200.

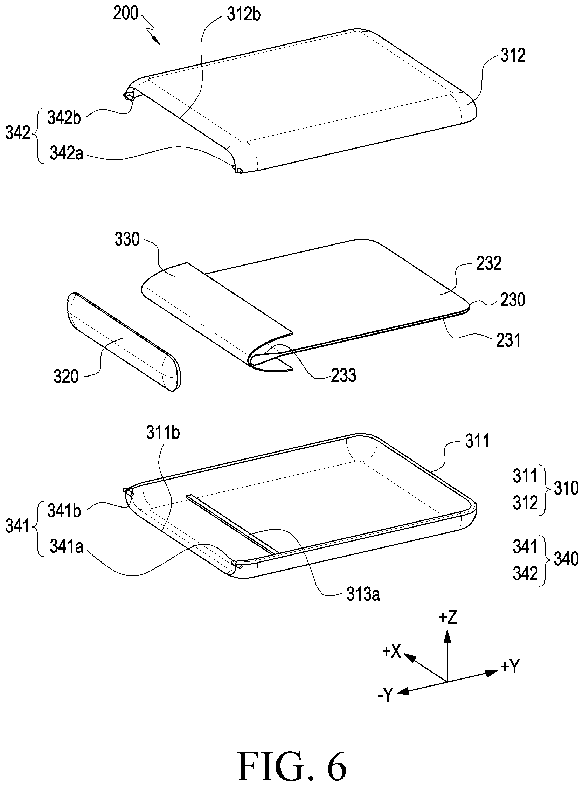

According to an embodiment, the first housing 210 may be rotatably connected to the second housing 220. For example, the first housing 210 may be rotatably connected to the second housing 220 using a hinge structure (e.g., the hinge structure 280 in FIG. 4). The electronic device 200 may be switched to a folded state (e.g., FIG. 2) or an unfolded state (e.g., FIG. 3). When the electronic device 200 is in the folded state, the first front surface 210a may face the second front surface 220a, and when the electronic device 200 is in the unfolded state, the direction where the first front surface 210a is oriented may be the same as the direction where the second front surface 220a is oriented. For example, in the unfolded state, the first front surface 210a may be located on substantially the same plane as the second front surface 220a. According to an embodiment, the second housing 220 may move relative to the first housing 210. According to an embodiment, the first housing 210 may receive a force for rotation relative to the second housing 202 using an elastic member (e.g., the elastic member 330 in FIG. 6).

According to an embodiment, the first housing 210 and the second housing 220 may be disposed on opposite sides about the folding axis A and may have generally symmetrical shapes with respect to the folding axis A. The angle between the first housing 210 and the second housing 220 may change depending on whether the electronic device 200 is in the unfolded state, the folded state, or an intermediate state between the unfolded state and the folded state.

According to an embodiment, the electronic device 200 may include a hinge cover 240. At least a portion of the hinge cover 240 may be disposed between the first housing 210 and the second housing 220. According to an embodiment, depending on the state of the electronic device 200, the hinge cover 240 may be covered by portions of the first housing 210 and the second housing 220 or may be exposed to the outside of the electronic device 200. According to an embodiment, the hinge cover 240 may protect the hinge structure (e.g., the hinge structure 280 in FIG. 4) and/or the elastic member (e.g., the elastic member 330 in FIG. 6) from an external impact applied to the electronic device 200. According to an embodiment, the hinge cover 240 may be referred to as a hinge housing.

According to an embodiment, as illustrated in FIG. 2, when the electronic device 200 is in the unfolded state, the hinge cover 240 may not be exposed by being covered by the first housing 210 and the second housing 220. As another example, as illustrated in FIG. 3, when the electronic device 200 is in the folded state (e.g., the fully folded state), the hinge cover 240 may be exposed to the outside between the first housing 210 and the second housing 220. As another example, when the first housing 210 and the second housing 220 are in the intermediate state in which the first and second housings are folded with a certain angle therebetween, the hinge cover 240 may be partially exposed to the outside between the first housing 210 and the second housing 220. However, in this case, the exposed area may be smaller than that in the fully folded state. According to an embodiment, the hinge cover 240 may include a curved surface.

According to an embodiment, the display 230 may visually provide information to the outside of the electronic device 200 (e.g., a user). The display 230 may include, for example, a hologram device or a projector, and a control circuit to control the corresponding device. According to an embodiment, the display 230 may include a touch sensor configured to detect a touch or a pressure sensor configured to measure the intensity of force generated by the touch.

According to an embodiment, the display 230 may refer to a display, at least a portion of which is transformable into a planar surface or a curved surface. For example, the display 230 may be configured to vary in response to the relative movement of the second housing 220 with respect to the first housing 210. According to an embodiment, the display 230 may include a folding area 233, and a first display area 231 disposed on one side (e.g., above (in the +Y direction)) of the folding area 233 and a second display area 232 disposed on the other side (e.g., below (in the -Y direction)) with respect to the folding area 233. According to an embodiment, the folding area 233 may be located above a hinge structure (e.g., the hinge structure 280 in FIG. 4) and/or an elastic member (e.g., the elastic member 330 of FIG. 6) when the electronic device 200 is in the unfolded state (e.g., FIG. 2). For example, at least a portion of the folding area 233 may face the hinge structure 280. According to an embodiment, the folding area 233 may be referred to as a portion of the display 230 that bends at least partially based on a change in the state of the electronic device 200 (e.g., folded or unfolded). According to an embodiment, the first display area 231 may be disposed on the first housing 210, and the second display area 232 may be disposed on the second housing 220. According to an embodiment, the display 230 may be accommodated in the first housing 210 and the second housing 220.

However, the area division of the display 230 illustrated in FIG. 2 is exemplary, and the display 230 may be divided into multiple (e.g., four or more or two) areas depending on its structure or function.

In addition, in the embodiment illustrated in FIG. 2, the areas of the display 230 may be divided by the folding area 233 or the folding axis (the axis A) extending in parallel to the X-axis. However, in another embodiment, the areas of the display 230 may be divided with reference to another folding area (e.g., a folding area parallel to the Y-axis) or another folding axis (e.g., a folding axis parallel to the Y-axis). According to an embodiment, the display 230 may be coupled to or disposed adjacent to a touch detection circuit, a pressure sensor that is capable of measuring touch intensity (pressure), and/or a digitizer configured to detect a magnetic field-type stylus pen.

According to an embodiment, the electronic device 200 may include a rear display 234. The rear display 234 may be disposed to be oriented in a different direction from the display 230. For example, the display 230 may be visually exposed through the front surface (e.g., the first front surface 210a and/or the second front surface 220a) of the electronic device 200, and the rear display 234 may be visually exposed through the rear surface (e.g., the first rear surface 210b) of the electronic device 200.

According to an embodiment, the electronic device 200 may include one or more camera modules 204 and 206 and a flash 208. According to an embodiment, the electronic device 200 may include a front camera module 204 exposed through the front surface (e.g., the first front surface 210a) and/or a rear camera module 206 exposed through the rear surface (e.g., the first rear surface 220b). The camera modules 204 and 206 may include one or more lenses, image sensors, flashes, and/or image signal processors. The flash 208 may include a light-emitting diode or xenon lamp. In some embodiments, two or more lenses (e.g., an infrared camera, a wide-angle lens, and a telephoto lens), and image sensors may be arranged on one surface of the electronic device 200. The configuration of the front camera module 204 and/or the rear camera module 206 may be entirely or partially identical to the configuration of the camera module 180 of FIG. 1.

FIG. 4 is an exploded perspective view of an electronic device according to an embodiment of the disclosure.

Referring to FIG. 4, the electronic device 200 may include a first housing 210, a second housing 220, a display 230, a hinge cover 240, a battery 250, a printed circuit board 260, a flexible printed circuit board 270, and a hinge structure 280. The configurations of the first housing 210, the second housing 220, the display 230, and the hinge cover 240 of FIGS. 3 and 4 may be entirely or partially identical to those of the first housing 210, the second housing 210, the display 230, and the hinge cover 240 of FIG. 2 and/or FIG. 3.

According to an embodiment, the electronic device 200 may include a first support member 212 and a second support member 222. For example, the first housing 210 may include a first support member 212, and the second housing 220 may include a second support member 222. According to an embodiment, the first support member 212 and/or the second support member 222 may support components of the electronic device 200 (e.g., the display 230, the battery 250, and the printed circuit board 260).

According to an embodiment, the first support member 212 and/or the second support member 222 may be made of a metal material and/or a non-metal (e.g., polymer) material. According to an embodiment, the first support member 212 may be disposed between the display 230 and the battery 250. For example, the display 230 may be coupled to one surface of the first support member 212, and the battery 250 and the printed circuit board 260 may be disposed on the other surface.

According to an embodiment, the electronic device 200 may include a first protective member 214 and a second protective member 224. For example, the first housing 210 may include the first protective member 214, and the second housing 220 may include the second protective member 224. According to an embodiment, the protective members 214 and 224 may protect the display 230 from external impacts. For example, the first protective member 214 may surround at least a portion of the display 230 (e.g., the first display area 231 in FIG. 1), and the second protective member 224 may surround at least a portion of another portion of the display 230 (e.g., the second display area 232 in FIG. 1). According to an embodiment, the first protective member 214 may be referred to as a first decoration member, and the second protective member 214 may be referred to as a second decoration member.

According to an embodiment, the housings 210 and 220 may include a first rear surface plate 216 and a second rear surface plate 226. For example, the first housing 210 may include the first rear surface plate 216 connected to the first support member 212, and the second housing 220 may include the second rear surface plate 226 connected to the second support member 222. According to an embodiment, the rear surface plates 216 and 226 may define a portion of the exterior of the electronic device 200. For example, the first rear surface plate 216 may define the first rear surface (e.g., the first rear surface 210b in FIG. 1), and the second rear surface plate 226 may define the second rear surface (e.g., the second rear surface 220b in FIG. 1). According to an embodiment, a first battery 252 and a first printed circuit board 262 may be disposed between the first support member 212 and the first rear surface plate 216, and a second battery 254 and a second printed circuit board 264 may be disposed between the second support member 222 and the second rear surface plate 226.

According to an embodiment, the hinge cover 240 may accommodate at least a portion of the hinge structure 280. For example, the hinge cover 240 may include an accommodation groove 242 to accommodate the hinge structure 280. According to an embodiment, the hinge cover 240 may be coupled with the hinge structure 280. According to an embodiment, when the electronic device 200 is in the unfolded state, at least a portion of the hinge cover 240 may be located between the hinge structure 280 and the housings 210 and 220. According to an embodiment, the hinge cover 240 can guide the movement of the housings 210 and 220. For example, the first housing 210 and the second housing 220 may rotate relative to the hinge cover 240 in the state of being connected to the hinge cover 240.

According to an embodiment, the battery 250 is a device that supplies power to at least one component of the electronic device 200, and may include a non-rechargeable primary battery, a rechargeable secondary battery, or a fuel cell. The battery 250 may be integrally disposed inside the electronic device 200, or may be disposed to be detachable from the electronic device 200. According to an embodiment, the battery 250 may include a first battery 252 disposed in the first housing 210 and a second battery 254 disposed in the second housing 220. For example, the first battery 252 may be disposed on the first support member 212, and the second battery 254 may be disposed on the second support member 222.

According to an embodiment, a processor (e.g., the processor 120 in FIG. 1), memory (e.g., the memory 130 in FIG. 1), and/or an interface (e.g., the interface 177 in FIG. 1) may be mounted on the printed circuit board 260. According to an embodiment, the printed circuit board 260 may include a first printed circuit board 262 disposed in the first housing 210 and a second printed circuit board 264 disposed in the second housing 220.

According to an embodiment, the flexible printed circuit board 270 may electrically connect a component located in the first housing 210 (e.g., the first printed circuit board 262) and a component located in the second housing 220 (e.g., the second printed circuit board 264). According to an embodiment, at least a portion of the flexible printed circuit board 270 may cross the hinge cover 240 and/or the hinge structure 280. For example, a portion of the flexible printed circuit board 270 may be disposed within the first housing 210 and another portion may be disposed within the second housing 220. According to an embodiment, the flexible printed circuit board 270 may include a first flexible printed circuit board 272 connected to an antenna and a second flexible printed circuit board 274 connected to the display 230.

According to an embodiment, the hinge structure 280 may include multiple hinge structures 280-1 and 280-2 arranged in parallel to each other. For example, the hinge structure 280 may include a first hinge structure 280-1 and a second hinge structure 280-2 spaced apart from the first hinge structure 280-1. According to an embodiment, the first hinge structure 280-1 and the second hinge structure 280-2 may be symmetrical to each other with respect to the length direction of the electronic device 200 (e.g., the Y-axis direction). According to an embodiment, the hinge structure 280 may be omitted depending on the embodiment of the electronic device 200.

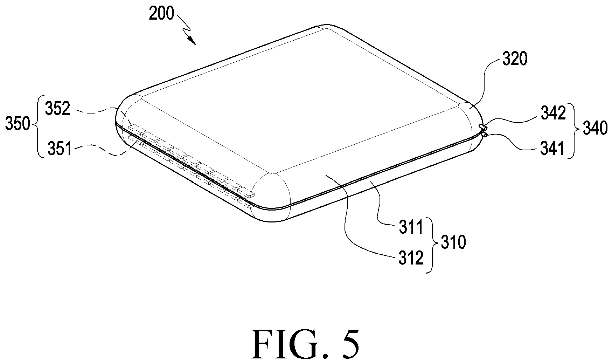

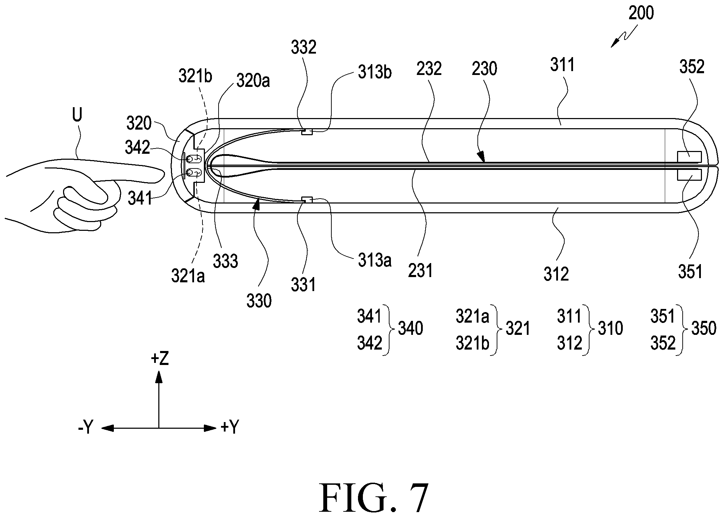

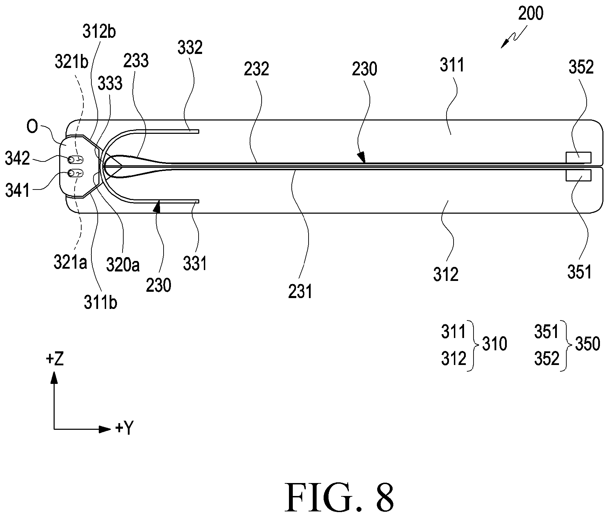

FIG. 5 is a projection view of the electronic device according to an embodiment of the disclosure. FIG. 6 is a schematic exploded perspective view of an electronic device according to an embodiment of the disclosure. FIG. 7 is a cross-sectional view of an electronic device according to an embodiment of the disclosure. FIG. 8 is a cross-sectional view of an electronic device according to an embodiment of the disclosure.

Referring to FIG. 5, FIG. 6, and/or FIG. 7, the electronic device 200 may include a housing 310, a display 230, a hinge cover 320, an elastic member 330, and/or a shaft 340. The configurations of the housing 310, the display 230, and the hinge cover 320 of FIG. 5, FIG. 6, and/or FIG. 7 may be entirely or partially identical to those of the housing 202, the display 230, and the hinge cover 240 of FIG. 2, FIG. 3, and/or FIG. 4.

According to an embodiment, the housing 310 may include a fixing area 313 configured to reduce the detachment of the elastic member 330. For example, the first housing 311 may include a first fixing area 313a configured to fix the first area 331 of the elastic member 330. The second housing 312 may include a second fixing area 313b configured to fix the second area 332 of the elastic member 330. According to an embodiment, the elastic member 330 may be connected to the housing 310 to be replaceable using the fixing area 313. By replacing the elastic member 330, the repairability of the electronic device 200 may be improved.

According to an embodiment, the electronic device 200 may be unfolded using the hinge cover 320 and the elastic member 330. For example, the hinge cover 320 may be moved based on a force provided by a user. At least a portion of the elastic member 330 may be unfolded based on the movement of the hinge cover 320. By unfolding the elastic member 330, the elastic member 330 may provide force to the housing 310, and the housing 310 may be unfolded. According to an embodiment, the movement of the hinge cover 320 may be referred to as at least one of a sliding movement or a shape transformation of the hinge cover 320. According to an embodiment, when a user presses at least a portion of the hinge cover 320 using a body part (e.g., a finger), the hinge cover 320 may move to the interior of the electronic device 200 (e.g., in the +Y direction). According to an embodiment, the hinge cover 320 may have a flexible structure. For example, the hinge cover 320 may be at least partially pressed by a body part (e.g., a finger) of the user U, and the elastic member 330 may receive at least part of the force that the user U applies to the hinge cover 320. The elastic member 330 may be expanded based on the force received as a result of the shape transformation of the hinge cover 320.

According to an embodiment, the electronic device 200 may include a shaft 340 configured to guide the movement of the hinge cover 320. For example, the hinge cover 320 may slide based on the user's input in the state of accommodating the shaft 340. According to an embodiment, the shaft 340 may extend from the housing 310 of the electronic device 200. The shaft 340 may include a first shaft 341 extending from the first housing 311 and a second shaft 342 extending from the second housing 312. According to an embodiment, the first shaft 341 may include a (1-1)th shaft 341a extending from one side surface of the first housing 311, and a (1-2)th shaft 341b extending from the other side surface of the first housing 311. According to an embodiment, the second shaft 342 may include a (2-1)th shaft 342a extending from one side surface of the second housing 312, and a (2-2)th shaft 342b extending from the other side surface of the second housing 312. According to an embodiment, the first shaft 341 may be arranged substantially parallel to the second shaft 342. According to an embodiment, the (1-1)th shaft 341a may be located on substantially the same plane as the (1-2)th shaft 341b. The (2-1)th shaft 342a may be located on substantially the same plane as the (2-2)th shaft 342b. According to an embodiment, the shaft 340 may be a separate component assembled into the housing 310. According to an embodiment, the shaft 340 may be referred to as a portion of the housing 310 that extends or protrudes from the housing 310.

Herein, the length and/or shape of the shaft 340 is illustrated in an exaggerated or reduced manner for the purpose of explanation. For example, the shaft 340 may extend toward the interior of the hinge cover 320 and may be visually invisible from the exterior of the electronic device 200.

According to an embodiment, the hinge cover 320 may move along the shaft 340. The hinge cover 320 may include at least one recess 321 configured to accommodate the shaft 340. The recess 321 of the hinge cover 320 may be referred to as a through hole or groove formed in the hinge cover 320. According to an embodiment, the hinge cover 320 may include a first recess 321a configured to accommodate the first shaft 341 and a second recess 321b configured to accommodate the second shaft 342. According to an embodiment, the first recess 321a may be located substantially parallel to the second recess 321b.

According to an embodiment, the electronic device 200 may be unfolded using the elastic member 330. For example, the first housing 311 and the second housing 312 may be transformed into the unfolded state (e.g., FIG. 2) based on the elastic force of the elastic member 330.

According to an embodiment, at least a portion of the elastic member 330 may be unfolded based on the sliding movement of the hinge cover 320. The elastic member 330 may transmit force to the housing 310 based on the movement of the hinge cover 320. For example, the elastic member 330 may include a first area 331 located in the first housing 311, a second area 332 located in the second housing 312, and a third area 333 configured to come into contact with the hinge cover 320. According to an embodiment, the third area 333 may receive at least part of the force applied by the user to the hinge cover 320 from the inner surface 320a of the hinge cover 320. At least a portion of the elastic member 330 may be unfolded by the force received by the third area 333. When the elastic member 330 is unfolded, the first area 331 of the elastic member 330 may transmit force to the first housing 311, and the second area 332 may transmit force to the second housing 312. The first area 331 may face at least a portion of the first housing 311. The second area 332 may face at least a portion of the second housing 312. The first housing 311 and the second housing 312 may be opened by an elastic member 330. According to an embodiment, the first area 331 may be connected or fastened to the first housing 311 using the first fixing area 313a. The second area 332 may be connected or fastened to the second housing 312 using the second fixing area 313b.

According to an embodiment, the elastic member 330 may be referred to as an elastic body. For example, the elastic member 330 may include a leaf spring.

According to an embodiment, the first area 331 may be referred to as a first end area. The second area 332 may be referred to as a second end area. The third area 333 may be referred to as a pressing area or an intermediate area.

According to an embodiment, at least a portion of the elastic member 330 may surround at least a portion of the display 230. For example, at least a portion of the third area 333 may surround at least a portion of the folding area 233 of the display 230.

According to an embodiment, when the electronic device 200 is opened using the elastic member 330, the hinge structure (e.g., the hinge structure 280 in FIG. 4) may be excluded from the electronic device 200. By excluding the hinge structure 280, the number of components used in the electronic device 200 may be reduced, and the weight of the electronic device 200 and the cost for producing the electronic device 200 may be reduced.

According to an embodiment, the elastic member 330 may include metal. For example, the elastic member 330 may be manufactured using stainless steel.

According to an embodiment, the direction in which the hinge cover 320 moves may be determined based on the structures of the first housing 311 and the second housing 312. For example, the first housing 311 may include a first curved surface 311b configured to guide the movement of the hinge cover 320. The second housing 312 may include a second curved surface 312b configured to guide the movement of the hinge cover 320.

According to an embodiment, the electronic device 200 may include a magnetic body 350 configured to maintain the closed state of the housing 310. For example, the magnetic body 350 may include a first magnetic body 351 located within the first housing 311 and a second magnetic body 352 located within the second housing 312. According to an embodiment, the first magnetic body 351 may be magnetically coupled to the second magnetic body 352. For example, the first magnetic body 351 and the second magnetic body 352 may be arranged to generate attractive force. For example, the first magnetic body 351 and the second magnetic body 352 may have different polarities at the portions facing each other. According to an embodiment, the first magnetic body 351 or the second magnetic body 352 may be excluded, and the first magnetic body 351 or the second magnetic body 352 may be replaced with a metal that is attracted to the magnetic body 350. According to an embodiment, the magnetic body 350 may keep the housing 310 closed when the user does not apply force to the hinge cover 320 of the electronic device 200. For example, when the hinge cover 320 presses the elastic member 330, and the force transmitted by the elastic member 330 to the housing 310 is stronger than the attractive force (e.g., the magnetic force) between the first magnetic body 351 and the second magnetic body 352, the electronic device 200 may be opened.

According to an embodiment (e.g., FIG. 7), the side surface of the electronic device 200 may be substantially curved. According to an embodiment (e.g., FIG. 8), a portion of the side surface of the electronic device 200 may include a flat surface. The exterior of the electronic device 200 is not limited to the structure illustrated in the disclosure. For example, the structure of the electronic device 200 illustrated in FIG. 7 or FIG. 8 is an optional structure.

According to an embodiment, the structure of the electronic device 200 illustrated in FIG. 7 and FIG. 8 may be that illustrated in the state in which the user U applies force to the electronic device 200. For example, when the user U applies force to the hinge cover 320, the first shaft 341 of the electronic device 200 may move from a first direction (the +Y direction) of the first recess 321a toward a second direction (the -Y direction), and the second shaft 342 may move from the first direction (the +Y direction) of the second recess 321b toward the second direction (the -Y direction).

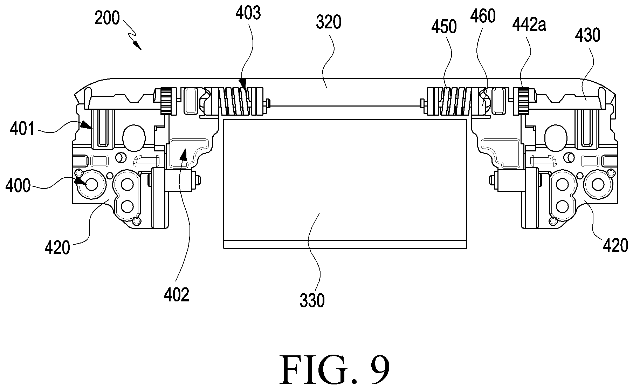

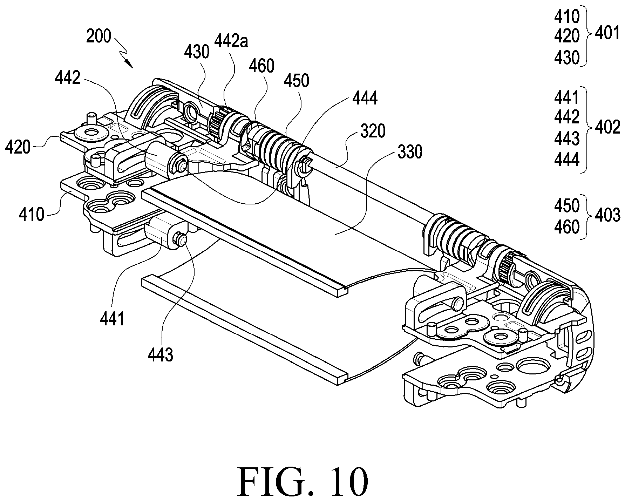

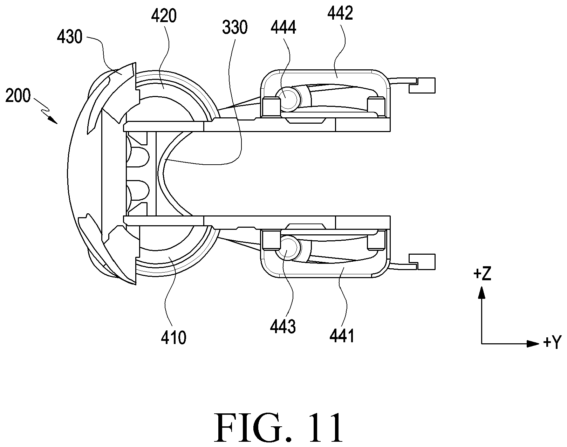

FIG. 9 is a perspective view of an electronic device including a hinge module and an elastic member according to an embodiment of the disclosure. FIG. 10 is a top view of the electronic device including the hinge module and the elastic member according to an embodiment of the disclosure. FIG. 11 is a side view of the electronic device including the hinge module and the elastic member according to an embodiment of the disclosure.

Referring to FIGS. 9, 10, and/or 11, the electronic device 200 may include a hinge cover 320, an elastic member 330, and a hinge structure 400. The configurations of the hinge cover 320 and the elastic member 330 of FIG. 9, FIG. 10 and/or FIG. 11 may be entirely or partially identical to the configurations of the hinge cover 320 and the elastic member 330 of FIG. 6, and the configuration of the hinge structure 400 of FIG. 9, FIG. 10, and/or FIG. 11 may be entirely or partially identical to the configuration of the hinge structure 280 of FIG. 4.

According to an embodiment, the elastic member 330 may be used together with the hinge structure 400. For example, when the electronic device 200 is in the folded state and force is transmitted to the hinge cover 320, the hinge cover 320 may slide along the inner side (the +Y direction) of the electronic device 200 and come into contact with the elastic member 330. According to an embodiment, the hinge cover 320 may include a contact surface 320a facing the elastic member 330.

According to an embodiment, the hinge cover 320 may be slidable relative to the hinge structure 400. For example, the hinge cover 320 may be movably located relative to a portion of the hinge structure 400 (e.g., a rotation bracket 430).

According to an embodiment, the hinge structure 400 may implement the folding motion of the electronic device 200. For example, the hinge structure 400 may include a rotation structure 401, a linkage structure 402, and/or a fixed structure 403.

According to an embodiment, the rotation structure 401 may substantially implement or guide the rotation motion of the first housing (e.g., the first housing 210 in FIG. 1) and/or the second housing (e.g., the second housing 220 in FIG. 2). According to an embodiment, the rotation structure 401 may provide a first rotation axis Ax1 and a second rotation axis Ax2. According to an embodiment, the rotation structure 401 may be connected to a first support member (e.g., the first support member 212 in FIG. 4) of the first housing 210 and a second support member (e.g., the second support member 222 in FIG. 4) of the second housing 220. According to an embodiment, the rotation structure 401 may include a first rotation member 410 connected to the first support member 212 and a second rotation member 420 connected to the second support member 222. According to an embodiment, the rotation structure 401 may include a rotation bracket 430 that accommodates the first rotation member 410 and the second rotation member 420. For example, the first rotation member 410 and the second rotation member 420 may be accommodated in the rotation bracket 430 and rotate relative to the rotation bracket 430. According to an embodiment, the rotation bracket 430 may be connected to the hinge cover 320.

According to an embodiment, the linkage structure 402 may link the rotation of the first housing 210 with the rotation of the second housing 220. According to an embodiment, the linkage structure 402 may transmit at least part of the force applied to the first housing 210 to the second housing 220, or may transmit at least part of the force applied to the second housing 220 to the first housing 210. For example, the linkage structure 402 may include at least one gear and may rotate the second housing 220 by an angle substantially equal to the angle by which the first housing 210 rotates. According to an embodiment, the linkage structure 402 may include a first linkage member 441 connected to the first rotation member 410 and including a first gear (not illustrated), a second linkage member 442 connected to the second rotation member 420 and including a second gear 442a. The linkage structure 402 may include a plurality of gears (not illustrated) connected to the first linkage member 441 and the second linkage member 442. According to an embodiment, the linkage structure 402 may receive force from the rotation members 410 and 420 of the rotation structure 401 or may transmit force to the rotation members 410 and 420 using one or more pins 443 and 444. For example, the first linkage member 441 may be connected to the first pin 443. The first pin 443 may slide within a slit or groove formed in the first rotation member 410. The second linkage member 442 may be connected to the second pin 444. The second pin 444 may slide within a slit or groove formed in the second rotation member 420. By sliding the first pin 443 and/or the second pin 444, the difference between the rotation axes of the rotation members 410 and 420 and the rotation axes of the linkage members 441 and 442 may be compensated.

According to an embodiment, the fixed structure 403 may position the first housing 210 and the second housing 220 at a certain angle. For example, the fixed structure 403 may prevent or reduce movement and/or rotation of the first housing 210 and/or the second housing 220 of the electronic device 200 by providing pressure to the rotation structure 401 and/or the linkage structure 402. For example, when a user applies external force greater than a predetermined value, the hinge structure 400 may allow rotation of the first housing 210 and/or the second housing 220, and when no external force is applied or external force less than a predetermined value is applied, the fixed structure 403 may be used to maintain the first housing 210 and/or the second housing 220 in a stationary state. According to an embodiment, the fixed structure 403 may include at least one spring 450 and a cam structure 460 configured to provide force to the rotation structure 401 and/or the linkage structure 402. According to an embodiment, the stationary state of the first housing 210 and/or the second housing 220 may be referred to as a flex mode of the electronic device 200.

The structure of the hinge structure 400 disclosed herein is optional. For example, at least one of the rotation structure 401, the linkage structure 402, or the fixed structure 403 of the hinge structure 400 may be changed or omitted.

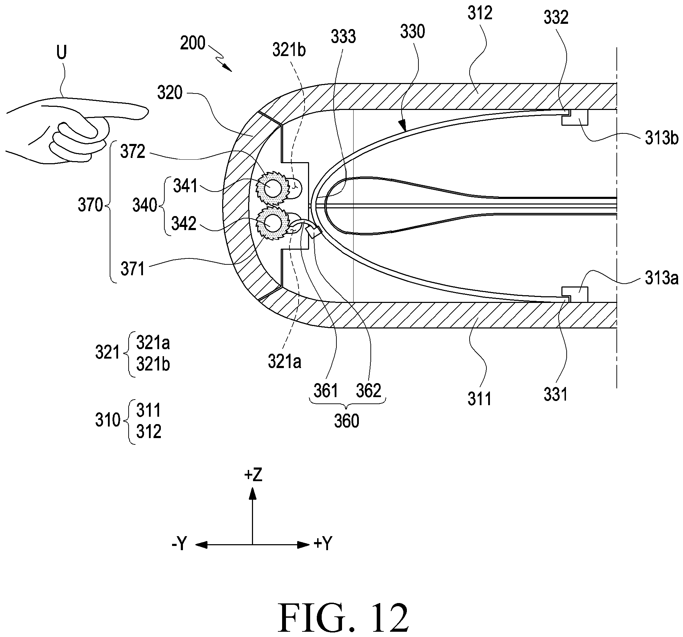

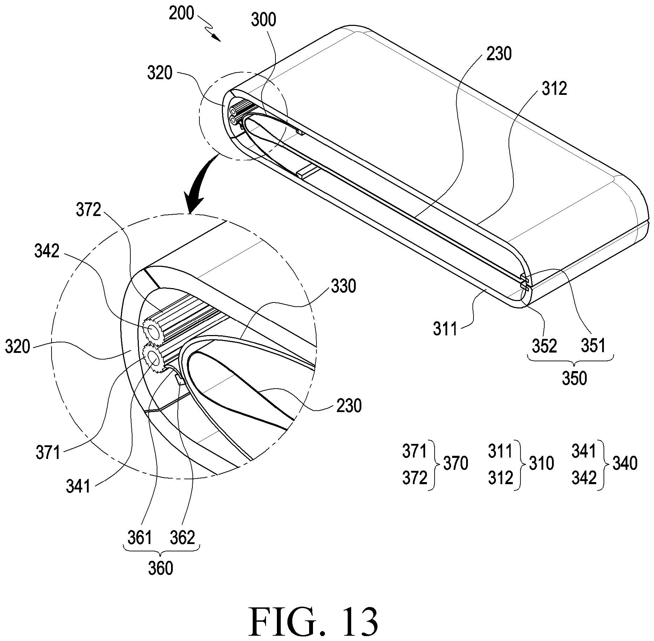

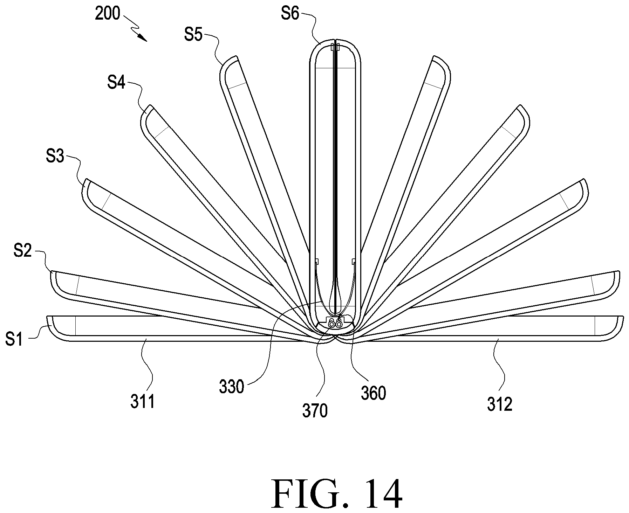

FIG. 12 is a cross-sectional view of an electronic device including a detent structure according to an embodiment of the disclosure. FIG. 13 is a cross-sectional perspective view of the electronic device including the detent structure according to an embodiment of the disclosure. FIG. 14 is a view illustrating angle maintenance of the electronic device according to an embodiment of the disclosure.

Referring to FIG. 12, FIG. 13, and/or FIG. 14, the electronic device 200 may include a display 230, a housing 310, a hinge cover 320, an elastic member 330, a shaft 340, a magnetic body 350, a detent structure 360, and/or a gear structure 370. The configurations of the display 230, the housing 310, the hinge cover 320, the elastic member 330, the shaft 340, and/or the magnetic body 350 of FIG. 12, FIG. 13, and/or FIG. 14 may be entirely or partially identical to those of the display 230, the housing 310, the hinge cover 320, the elastic member 330, the shaft 340, and/or the magnetic body 350 of FIG. 5, FIG. 6, and/or FIG. 7.

According to an embodiment, the detent structure 360 may include an auxiliary elastic member 361 configured to limit the rotation of the gear structure 370. According to an embodiment, the detent structure 360 may adjust the angle at which the electronic device 200 is folded. For example, the detent structure 360 may limit the rotation of the gear structure 370. By limiting the rotation of the gear structure 370, the movement of the hinge cover 320 may be limited. According to an embodiment, when a user applies force greater than the force that is transmitted to the gear structure 370 by the auxiliary elastic member 361 to the hinge cover 320, the electronic device 200 may be unfolded.

According to an embodiment, the detent structure 360 may include a fixing portion 362 configured to connect the auxiliary elastic member 361 to the elastic member 330. According to an embodiment, the detent structure 360 may be connected to the elastic member 330. For example, the fixing portion 362 of the detent structure 360 may be coupled to the third area 333 of the elastic member 330 through fastening or attachment. According to an embodiment, one end of the auxiliary elastic member 361 may be connected or fastened to the fixing portion 362. According to an embodiment, the fixed portion 362 is a structure configured to connect the auxiliary elastic member 361 to the elastic member 330, but is not limited to the illustrated structure.

According to an embodiment, the electronic device 200 may include a gear structure 370. The gear structure 370 may be connected to the shaft 340. For example, the gear structure 370 may include a first gear 371 connected to the first shaft 341 and a second gear 372 connected to the second shaft 342.

According to an embodiment, the electronic device 200 may maintain a state in which it is unfolded at a certain angle using the auxiliary elastic member 361 and the gear structure 370. For example, when the hinge cover 320 slides, the elastic member 330 may be at least partially unfolded by receiving force from the hinge cover 320. According to an embodiment, the unfolded state of the electronic device 200 may be provided in various ways. According to an embodiment, the electronic device 200 may maintain a first state S1 in which the electronic device is fully unfolded by the elastic member 330. According to an embodiment, the electronic device 200 may maintain a sixth state S6 in which the electronic device is fully folded. According to an embodiment, the electronic device 200 may maintain an intermediate state S2, S3, S4, or S5 in which the electronic device is only partially unfolded by the detent structure 360. The number and/or angles of intermediate states may be changed based on the number of gear teeth of the gear structure 370. The shape of the gear structure 370 illustrated in FIGS. 12 to 14 is an optional structure. For example, according to an embodiment, the first gear 371 and the second gear 372 may each have 18 gear teeth with an angular spacing of 20 degrees. However, the shape of the gear structure 370 illustrated in FIGS. 12 to 14 is an optional structure, and the spacing and/or number of gear teeth of the gear structure 370 may be changed.

According to an embodiment, the structures of FIG. 12, FIG. 13, and/or FIG. 14 may be used in conjunction with the above-described embodiments. For example, the electronic device 200 may include the gear structure 370 and the detent structure 360 of FIGS. 12 to 14, along with the hinge structure 400 of FIGS. 9 to 11.

According to an embodiment, the structure of the electronic device 200 illustrated in FIG. 12 may be that illustrated in the state in which the user U applies force to the electronic device 200. For example, when the user U applies force to the hinge cover 320, the first shaft 341 of the electronic device 200 may move from a first direction (the +Y direction) toward a second direction (the -Y direction), and the second shaft 342 may move from the first direction of the second recess 321b (the +Y direction) toward the second direction (the -Y direction).

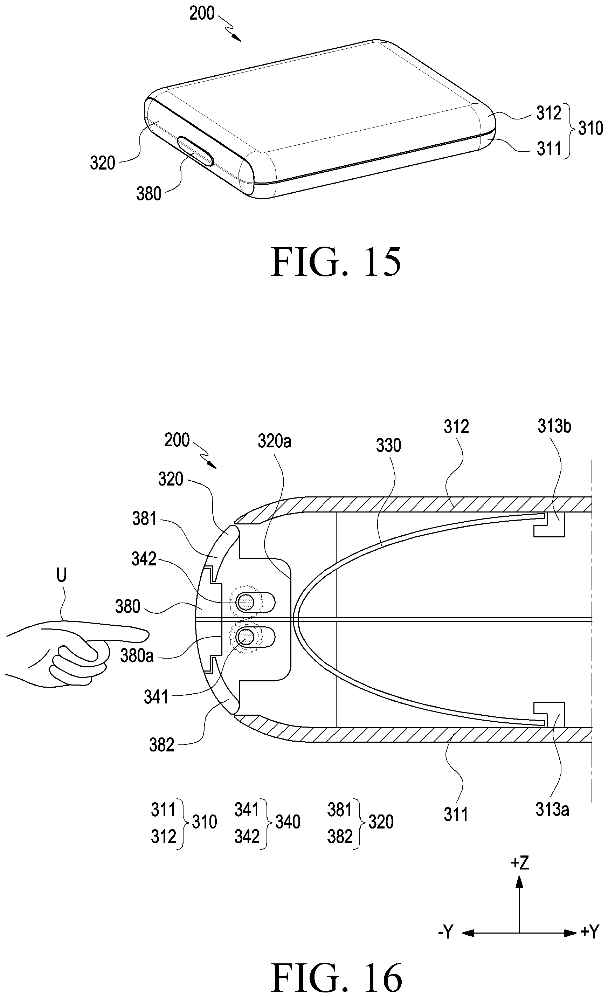

FIG. 15 is a perspective view of an electronic device including an input area according to an embodiment of the disclosure. FIG. 16 is a cross-sectional view of the electronic device including the input area according to an embodiment of the disclosure.

Referring to FIG. 15 and/or FIG. 16, the electronic device 200 may include a housing 310, a hinge cover 320, an elastic member 330, and a shaft 340. The configurations of the electronic device 200, the housing 310, the hinge cover 320, the elastic member 330, and the shaft 340 of FIG. 15 and/or FIG. 16 may be entirely or partially identical to those of the electronic device 200, the housing 310, the hinge cover 320, the elastic member 330, and the shaft 340 of FIG. 5, FIG. 6, and/or FIG. 7.

According to an embodiment, the hinge cover 320 of the electronic device 200 may include an input area 380 configured to move based on force applied from a user's body part (e.g., a finger). For example, the hinge cover 320 may include the input area and a support area 381 surrounding at least a portion of the input area 380. According to an embodiment, the input area 380 may be a portion of the hinge cover 320 that slides based on a user's input, and the support area 381 may be referred to as a portion of the hinge cover 320 connected to the housing 310.

According to an embodiment, as the input area 380 moves, the input area 380 and/or the hinge cover 320 may come into contact with the elastic member 330. The elastic member 330 may unfold at least a portion of the electronic device 200 based on the force transmitted through the input area 380 and/or the hinge cover 320.

According to an embodiment, the input area 380 may be a portion of the housing 310. According to an embodiment, the input area 380 may be referred to as a key input device or a push button. For example, the input area 380 may be a portion of the housing 310 that is pressed by a body part (e.g., a finger) of the user U.

According to an embodiment, the structure of FIG. 15 and/or FIG. 16 may be used with the above-described embodiments. For example, the electronic device 200 may include the above-described magnetic body 350, detent structure 360, gear structure 370, and/or hinge structure 400, along with the input area 380 of FIGS. 15 and 16.

According to an embodiment, the structure of the electronic device 200 illustrated in FIG. 16 may be that illustrated in the state in which the user U applies force to the electronic device 200. For example, when a user U applies force to the hinge cover 320, the first shaft 341 and the second shaft 342 of the electronic device 200 may move from the first direction (the +Y direction) toward the second direction (the -Y direction).

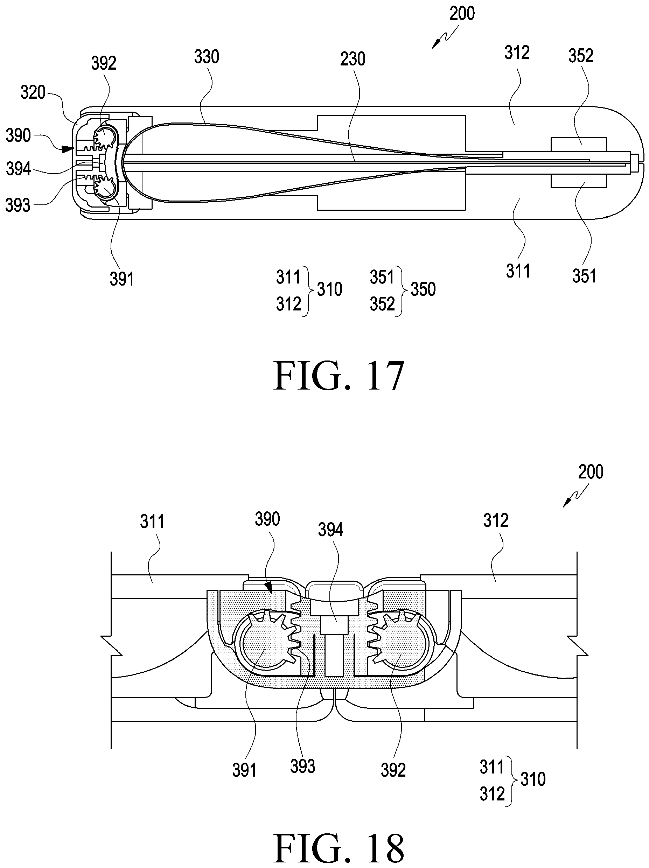

FIG. 17 is a cross-sectional view of an electronic device including a trigger structure in a folded state, according to an embodiment of the disclosure. FIG. 18 is a cross-sectional view of the electronic device including the trigger structure in an unfolded state, according to an embodiment of the disclosure.

Referring to FIG. 17 and/or FIG. 18, the electronic device 200 may include a display 230, a housing 310, a hinge cover 320, an elastic member 330, a shaft 340, a magnetic body 350, and a trigger structure 390. The configurations of the display 230, the housing 310, the hinge cover 320, the elastic member 330, the shaft 340, the magnetic body 350, and the trigger structure 390 of FIG. 17 and/or FIG. 18 may be entirely or partially identical to those of the display 230, the housing 310, the hinge cover 320, the elastic member 330, the shaft 340, and the magnetic body 350 of FIG. 5, FIG. 6, and/or FIG. 7.

In an embodiment, the trigger structure 390 may at least partially unfold the housing 310 based on the movement of the hinge cover 320. For example, the trigger structure 390 may include a first trigger gear 391 connected to the first housing 311 and a second trigger gear 392 connected to the second housing 312. The trigger structure 390 may include a gear shaft 393 connected to the hinge cover 320. The first trigger gear 391 may engage with the gear shaft 393. The second trigger gear 392 may engage with the gear shaft 393.

In an embodiment, the gear shaft 393 may move based on force applied by a user to the hinge cover 320 and the hinge cover 320. When the gear shaft 393 moves, the first trigger gear 391 and the second trigger gear 392 may rotate based on the movement of the gear shaft 393. Based on the rotation of the first trigger gear 391 and the second trigger gear 392, the electronic device 200 and/or the housing 310 may be at least partially unfolded.

According to an embodiment, by partially unfolding the electronic device 200, a user may insert a body part (e.g., a finger) into a space between the first housing 311 and the second housing 312 to open the electronic device 200.

According to an embodiment, when the gear shaft 393 moves, force may be applied to the elastic member 330. For example, the trigger structure 390 may include a pressing area 394 that is at least partially surrounded by the gear shaft 393. According to an embodiment, the pressing area 394 may apply at least part of the force applied by a user to the hinge cover 320, to the elastic member 330 based on the movement of the hinge cover 320. According to an embodiment, the pressing area 394 may be referred to as a portion of the trigger structure 390 that faces at least a portion of the elastic member 330 (e.g., the third area 333 in FIG. 7).

According to an embodiment, the structure of FIG. 17 and/or FIG. 18 may be used with the above-described embodiments. For example, the electronic device 200 may include the above-described magnetic body 350, detent structure 360, gear structure 370, input area 380 and/or hinge structure 400, along with the trigger structure 390 of FIGS. 17 and 18.

An electronic device (e.g., a portable terminal) includes a display having a flat surface or a display having a flat surface and a curved surface. An electronic device including a display may have a limitation in implementing a screen larger than the size of the electronic device due to a fixed display structure. Accordingly, electronic devices including a foldable display are being researched. However, a hinge structure is required to implement a foldable electronic device. The hinge structure may increase the weight and production cost of the electronic device. In addition, due to the hinge structure, an empty space may occur between the housings of the electronic device in the fully folded state, which may reduce the aesthetics of the electronic device.

However, the problems that the disclosure seeks to solve are not limited to the aforementioned problems, and may be expanded in various ways without departing from the spirit and scope of the disclosure.

According to an embodiment of the disclosure, an electronic device that is foldable using an elastic member may be provided. By excluding the hinge structure due to the elastic member, the weight of the electronic device may be reduced, and the production cost of the electronic device may be lowered.

In addition, various other effects identified directly or indirectly through this document may be provided.

According to an embodiment of the disclosure, an electronic device (e.g., the electronic device 200 in FIG. 2) may include a housing (e.g., the housing 202 in FIG. 2 and/or the housing 310 in FIG. 5) including a first housing (e.g., the first housing 210 in FIG. 2 and/or the first housing 311 in FIG. 5) and a second housing (e.g., the second housing 220 in FIG. 2 and/or the second housing 312 in FIG. 5) configured to rotate with respect to the first housing, a display (e.g., the display area 230 in FIG. 2) including a first display area (e.g., the first display area 231 in FIG. 2) connected to the first housing, a second display area (e.g., the second display area 232 in FIG. 2) connected to the second housing, and a folding area (e.g., the holding area 233 in FIG. 2) located between the first display area and the second display area, a hinge cover (e.g., the hinge cover 240 in FIG. 3 and/or the hinge cover 320 in FIG. 6) connected to the first housing and the second housing and configured to move based on force applied by a user, and an elastic member (e.g., the elastic member 330 in FIG. 6) configured to unfold based on the movement of the hinge cover and to open at least a portion of the housing.

According to an embodiment, the housing may include at least one shaft (e.g., the shaft 340 in FIG. 7) configured to guide the movement of the hinge cover.

According to an embodiment, the hinge cover may include at least one recess (e.g., the recess 321 in FIG. 7) configured to accommodate at least one shaft. The recess 321 may guide the movement direction of the hinge cover 320 and/or the shaft 340.

According to an embodiment, the elastic member may include a first area (e.g., the first area 331 in FIG. 7) located in the first housing, a second area (e.g., the second area 332 in FIG. 7) located in the second housing, and a third area (e.g., the third region (333) of FIG. 7) located between the first area and the second area and configured to come into contact with the hinge cover.

According to an embodiment, the first housing may include a first fixing area (e.g., the first fixing area 313a in FIG. 7) configured to connect the first area of the elastic member to the first housing, and the second housing may include a second fixing area (e.g., the second fixing area 313b in FIG. 7) configured to connect the second area of the elastic member to the second housing.

According to an embodiment, the electronic device may include a hinge (e.g., the hinge structure 400 in FIG. 9) connected to the first housing and the second housing. The rotation structure may include a rotation bracket (e.g., the rotation bracket 430 in FIG. 10), a first rotation member (e.g., the first rotation member 410 in FIG. 10) connected to the first housing and configured to rotate with respect to the rotation bracket, and a second rotation member (e.g., the second rotation member 420 in FIG. 10) connected to the second housing and configured to rotate with respect to the rotation bracket.

According to an embodiment, the hinge may include a linkage structure (e.g., the linkage structure 402 in FIG. 10) configured to link the rotation of the first housing with the rotation of the second housing. The linkage structure may include a first linkage member (e.g., the first linkage member 441 in FIG. 10) connected to the first rotation member and including a first gear, a second linkage member (e.g., the second linkage member 442 in FIG. 10) connected to the second rotation member and including a second gear (e.g., the second gear 442a in FIG. 10), and a plurality of gears connected to the first gear and the second gear.

According to an embodiment, the hinge may include a fixed structure (e.g., the fixed structure 403 in FIG. 10) including at least one spring (e.g., the spring 450 of FIG. 10) as a fixed structure configured to position the first housing and the second housing at a predetermined angle.

According to an embodiment, the hinge cover may include an input area (e.g., the input area 380 in FIG. 16) configured to move based on an input of the user, and a support area (e.g., the support area 381 in FIG. 16) surrounding at least a portion of the input area.

According to an embodiment, the electronic device may further include a magnetic body (e.g., the magnetic body 350 in FIG. 7) including a first magnetic body located within the first housing (e.g., the first magnetic body 351 in FIG. 7) and a second magnetic body located within the second housing and magnetically connected to the first magnetic body (e.g., the second magnetic body 352 in FIG. 7).

According to an embodiment, the electronic device may further include a gear structure (e.g., the gear structure 370 in FIG. 13) connected to the hinge cover and a detent structure (e.g., the detent structure 360 in FIG. 13) connected to the elastic member and configured to limit the rotation of the gear structure.

According to an embodiment, the detent structure may include an auxiliary elastic member (e.g., the auxiliary elastic member 361 in FIG. 12) connected to the elastic member and configured to engage with the gear structure.

According to one embodiment, the first housing may include a first curved surface (e.g., the first curved surface 311b in FIG. 8) configured to guide the movement of the hinge cover, and the second housing may include a second curved surface (e.g., the second curved surface 312b in FIG. 8) configured to guide the movement of the hinge cover.

According to an embodiment, the elastic member may surround at least a portion of the folding area.

According to an embodiment, the electronic device may include a trigger structure (e.g., the trigger structure 390 in FIG. 17) configured to unfold at least a portion of the housing based on the movement of the hinge cover. The trigger structure may include a gear shaft (e.g., the gear shaft 383 in FIG. 18) connected to the hinge cover, a first trigger gear (e.g., the first trigger gear 381 in FIG. 18) connected to the first housing and configured to engage with the gear shaft, and a second trigger gear (e.g., the second trigger gear 382 in FIG. 18) connected to the second housing and configured to engage with the gear shaft.

According to an embodiment, the elastic member may include stainless steel.

According to an embodiment of the disclosure, an electronic device (e.g., the electronic device 101 in FIG. 1 and/or the electronic device 200 in FIG. 2) may include a first housing (e.g., the first housing 210 in FIG. 2 and/or the first housing 311 in FIG. 5), a second housing 220 or 312 configured to rotate with respect to the first housing, a foldable display (e.g., the display 230 in FIG. 2) disposed in the first housing and the second housing, a hinge cover (e.g., the hinge cover 240 in FIG. 3 and/or the hinge cover 320 in FIG. 6) connected to the first housing and the second housing and configured to move based on force applied by a user, and an elastic member 330 configured to come into contact with the hinge cover to open at least a portion of the electronic device. The elastic member may include a first area (e.g., the first area 331 in FIG. 7) connected to the first housing, a second area (e.g., the second area 332 in FIG. 7) connected to the second housing, and a third area (e.g., the third area 333 in FIG. 7) located between the first area and the second area and configured to come into contact with the hinge cover.

According to an embodiment, the first housing may include a first shaft (e.g., the first shaft 341 in FIG. 7) configured to guide the movement of the hinge cover. The second housing may include a second shaft (e.g., the second shaft 342 in FIG. 7) configured to guide the movement of the hinge cover. According to an embodiment, the hinge cover may include a first recess (e.g., the recess 321a in FIG. 7) configured to accommodate the first shaft and a second recess (e.g., the recess 321b in FIG. 7) configured to accommodate the second shaft. The first recess 321a and the second recess 321b may guide the movement of the first shaft 341 and/or the second shaft 342.

According to an embodiment, the first housing may include a first fixing area (e.g., the first fixing area 313a in FIG. 7) configured to connect the first area of the elastic member to the first housing, and the second housing may include a second fixing area (e.g., the second fixing area 313b in FIG. 7) configured to connect the second area of the elastic member to the second housing.

According to an embodiment, the electronic device may include a hinge (e.g., the hinge structure 400 in FIG. 9) connected to the first housing and the second housing. The rotation structure may include a rotation bracket (e.g., the rotation bracket 430 in FIG. 10), a first rotation member (e.g., the first rotation member 410 in FIG. 10) connected to the first housing and configured to rotate with respect to the rotation bracket, and a second rotation member (e.g., the second rotation member 420 in FIG. 10) connected to the second housing and configured to rotate with respect to the rotation bracket.

According to an embodiment, the electronic device may further include a magnetic body (e.g., the magnetic body 350 in FIG. 7) including a first magnetic body located within the first housing (e.g., the first magnetic body 351 in FIG. 7) and a second magnetic body located within the second housing and magnetically connected to the first magnetic body (e.g., the second magnetic body 352 in FIG. 7).

It may be apparent to those ordinarily skilled in the technical field to which the disclosure belongs that the above-described foldable electronic device including an elastic member according to the disclosure is not limited by the above-described embodiments and drawings, and can be variously substituted, modified, and changed within the technical scope of the disclosure.

## Claims

1. An electronic device (101; 200) comprising:
a housing (202; 310) comprising a first housing (210; 311) and a second housing (220; 312) configured to rotate with respect to the first housing;
a display (230) comprising a first display area (231) connected to the first housing, a second display area (232) connected to the second housing, and a folding area (233) positioned between the first display area and the second display area;
a hinge cover (240; 320) connected to the first housing and the second housing and to move based on force applied by a user; and
an elastic member (330) configured to unfold based on movement of the hinge cover and to open at least a portion of the housing.

2. The electronic device of claim 1, wherein the housing comprises at least one shaft (340) configured to guide the movement of the hinge cover.

3. The electronic device according to one of preceding claims, wherein the hinge cover comprises at least one recess (321) configured to accommodate the at least one shaft.

4. The electronic device according to one of preceding claims, wherein the elastic member comprises a first area (331) located in the first housing, a second area (332) located in the second housing, and a third area (333) located between the first area and the second area and configured to come into contact with the hinge cover.

5. The electronic device of claim 4, wherein the first housing comprises a first fixing area (313a) configured to connect the first area of the elastic member to the first housing, and
wherein the second housing comprises a second fixing area (313b) configured to connect the second area of the elastic member to the second housing.

6. The electronic device according to one of preceding claims, comprising:
a hinge (400) comprising a rotation structure connected to the first housing and the second housing,
wherein the rotation structure comprises a rotation bracket (430), a first rotation member (410) connected to the first housing and configured to rotate with respect to the rotation bracket, and a second rotation member (420) connected to the second housing and configured to rotate with respect to the rotation bracket.

7. The electronic device of claim 6, wherein the hinge comprises a linkage structure (402) configured to link the rotation of the first housing with the rotation of the second housing, and
wherein the linkage structure comprises a first linkage member (441) connected to the first rotation member and comprising a first gear, a second linkage member (442) connected to the second rotation member and comprising a second gear (442a), and a plurality of gears connected to the first gear and the second gear.

8. The electronic device of claim 6, wherein the hinge is a fixing structure configured to position the first housing and the second housing at a predetermined angle, and comprises a fixing structure (403) comprising at least one spring (450).

9. The electronic device according to one of preceding claims, wherein the hinge cover comprises an input area (380) configured to move based on an input of the user and a support area (381) surrounding at least a portion of the input area.

10. The electronic device according to one of preceding claims, further comprising:
a magnetic body (350) comprising a first magnetic body (351) located within the first housing, and a second magnetic body (352) located within the second housing and magnetically connected to the first magnetic body.

11. The electronic device according to one of preceding claims, further comprising:
a gear structure (370) connected to the hinge cover; and
a detent structure (360) connected to the elastic member and configured to limit rotation of the gear structure.

12. The electronic device of claim 11, wherein the detent structure comprises an auxiliary elastic member (361) connected to the elastic member and configured to mesh with the gear structure.

13. The electronic device according to one of preceding claims, wherein the first housing comprises a first curved surface (311b) configured to guide movement of the hinge cover, and
wherein the second housing comprises a second curved surface (312b) configured to guide the movement of the hinge cover.

14. The electronic device according to one of preceding claims, wherein the elastic member surrounds at least a portion of the folding area.

15. The electronic device according to one of preceding claims, further comprising:
a trigger structure (390) configured to unfold at least a portion of the housing based on the movement of the hinge cover,
wherein the trigger structure comprises a gear shaft connected to the hinge cover, a first trigger gear connected to the first housing and configured to engage with the gear shaft, and a second trigger gear connected to the second housing and configured to engage with the gear shaft.
